# EUROPÄISCHE PATENTSCHRIFT

(11) **EP 2 533 261 B1**
(45) Veröffentlichungstag und Bekanntmachung des Hinweises auf die Patenterteilung: **01.02.2017**
(21) Anmeldenummer: 12167992.2
(22) Anmeldetag: 15.05.2012
(51) Int. Cl.: H01H 9/52, H02G 5/10, H02B 1/56, H02B 13/035

(54) **Kühlvorrichtung für eine Schaltanlage für ein elektrisches Energieversorgungsnetz und eine solche Schaltanlage**
Cooling device for a circuit assembly for an electrical energy supply network and such a switching assembly
Dispositif de refroidissement pour un dispositif de commutation pour un réseau d'alimentation en énergie électrique et un tel dispositif de commutation

(30) Priorität: 06.06.2011 DE 102011076986
(43) Veröffentlichungstag der Anmeldung: 12.12.2012
(73) Patentinhaber: Schneider Electric Sachsenwerk GmbH, 93055 Regensburg (DE)
(72) Erfinder: Summer, Raimund, Dr. rer.nat., 93186 Pettendorf (DE); Singh, Shailendra, 93051 Regensburg (DE)
(74) Vertreter: DREISS Patentanwälte PartG mbB

(56) Entgegenhaltungen:
- EP-A1- 2 219 197
- DE-A1- 2 051 150
- GB-A- 1 162 339

## Beschreibung

Die Erfindung betrifft eine Kühlvorrichtung für eine Schaltanlage, insbesondere eine Mittelspannungsschaltanlage, für ein elektrisches Energieversorgungsnetz, wobei die Schaltanlage einen Bereich aufweist, der sich beim Betrieb der Schaltanlage infolge einer von der Schaltanlage erzeugten Verlustleistung erwärmt. Die Erfindung betrifft außerdem eine entsprechende Schaltanlage.

Schaltanlagen für elektrische Energieversorgungsnetze sind allgemein bekannt. Beim Betrieb einer solchen Schaltanlage tritt eine Verlustleistung auf, die zu einer Erwärmung mindestens eines Bereiches der Schaltanlage führt. Die Verlustleistung kann beispielsweise von ohmschen Verlusten an elektrischen Leitern oder an elektrischen Verbindungstellen der Schaltanlage herrühren.

Insbesondere bei modernen intelligenten elektrischen Energienetzen können relativ starke Lastspitzen in einzelnen Netzelementen wie beispielsweise der Schaltanlage auftreten. Hierdurch steigt die Verlustleistung vorübergehend auf relativ hohe Werte an, sodass bei der bekannten Schaltanlage die Gefahr besteht, dass sie infolge der hohen Verlustleistung überhitzt wird oder Teile der der Schaltanlage, wie beispielsweise Kontakte oder Isolatoren vorzeitig altern, erhöht und die Verfügbarkeit der Schaltanlage somit verringert wird.

EP2219197 A1 offenbart eine Kühlvorrichtung für eine Schaltanlage gemäß dem Oberbegriff des Anspruchs 1.

Die Aufgabe der vorliegenden Erfindung besteht darin, eine Schaltanlage anzugeben, die mit Lastspitzen betrieben werden kann, die im Vergleich zu einer mittleren Last deutlich größer sind als bei der bekannten Schaltanlage zulässige Lastspitzen.

Diese Aufgabe wird gelöst durch eine Kühlvorrichtung mit den Merkmalen des Anspruchs 1 und durch eine Schaltanlage mit den Merkmalen des Anspruchs 9.

In einer Ausführungsform ist vorgesehen, dass die eingangs genannte Kühlvorrichtung Wärmespeichermittel mit mindestens einem in oder an dem Bereich angeordnetem Behältnis aufweist, wobei das Behältnis zur Aufnahme eines Fluids derart ausgebildet ist, dass das im Behälter befindliche Fluid beim Betrieb der Schaltanlage infolge der Verlustleistung erwärmt wird und dadurch zumindest einen Teil der Verlustleistung aufnimmt.

Dadurch, dass das im Behältnis befindliche Fluid durch die Verlustleistung erwärmt wird, nimmt es von der Schaltanlage in Form der Verlustleistung insbesondere während einer Lastspitze umgesetzte Wärme auf und wirkt so der Erwärmung der Schaltanlage entgegen. Das Fluid wirkt als Wärmepuffer. Nach der Lastspitze kühlt das Fluid wieder ab und gibt hierbei die während der Lastspitze aufgenommene Wärme an andere Bereiche oder Teile der Schaltanlage oder an die Umgebung der Schaltanlage ab. Die Wärmespeichermittel sind somit zum vorübergehenden Speichern von Wärme, die infolge der Verlustleistung umgesetzt wird, eingerichtet. Eine Masse des Fluids ist vorzugsweise so bemessen, dass die Wärmespeichermittel die während der Lastspitze umgesetzte Wärme aufnehmen können, ohne dass die Schaltanlage oder Teile davon zu heiß werden. Weil die Schaltanlage den Wärmepuffer in Form des Fluids aufweist, kann sie auch für Anwendungen, bei denen im Vergleich zu einer mittleren Last der Schaltanlage relativ hohe Lastspitzen auftreten, vergleichsweise kompakt und kostengünstig realisiert werden.

Es ist bevorzugt, dass es sich bei der Schaltanlage um eine mittels eines Isoliergases gasisolierte Schaltanlage handelt und der Bereich einen Innenraum und/oder eine Außenwand eines mit dem Isoliergas gefüllten Tanks der Schaltanlage umfasst. Eine gasisolierte Schaltanlage baut relativ kompakt, sodass hier die Gefahr einer Überhitzung besonders groß ist. Insbesondere sollte eine übermäßige Erwärmung von Teilen der Anlage vermieden werden. Mit Hilfe des Behältnisses kann dies erreicht werden.

Die Erfindung kann auch in Verbindung mit anderen Arten von Schaltanlagen angewendet werden. Beispielsweise kann mindestens ein Bauteil einer luftisolierten Schaltanlage mit dem Behältnis versehen werden, um dessen Überhitzung während der Lastspitze zu vermeiden.

Im Falle einer gasisolierten Schaltanlage ist bevorzugt, dass das Behältnis im Innenraum des Tanks angeordnet ist. Hierdurch wird eine Überhitzung der Teile der Anlage besonders wirkungsvoll vermieden.

Es ist von Vorteil, wenn der Bereich ein sich aufgrund der Verlustleistung erwärmendes Bauteil aufweist, wobei das Behältnis an dem Bauteil angeordnet ist oder das Bauteil ein Teil des Behältnisses bildet. Dies ermöglicht die direkte Kühlung des Bauteils. Bei dem Bauteil kann es sich beispielsweise um eine Wand der Schaltanlage handeln, die sich infolge der Verlustleistung erwärmt.

Hierbei ist bevorzugt, dass das Bauteil der Außenwand des Tanks entspricht, wobei das Behältnis vorzugsweise an einer Außenseite der Außenwand des Tanks angeordnet ist.

Bei dem Bauteil kann es sich auch um ein im Innern der Schaltanlage, insbesondere im Innenraum des Tanks, angeordnetes Bauteil handeln, wie beispielsweise um einen elektrischen Leiter, um einen Isolator oder um ein anderes Teil, das an einer Stelle der Schaltanlage angeordnet ist, wo die Verlustleistung auftritt.

Es ist besonders bevorzugt, dass ein Druck des Fluids im Behältnis so vorgegeben ist, dass das Fluid infolge der Erwärmung im Behältnis verdampft. Hierdurch wird erreicht, dass das Fluid die durch die Verlustleistung freigesetzte Wärme in als Verdunstungswärme aufnimmt, was zu einer noch besseren Verringerung der Erwärmung des Bereichs der Schaltanlage führt. Das für die Kühlvorrichtung vorgesehene Fluid und der Druck sind vorzugsweise so aufeinander abgestimmt, dass das Fluid infolge der Erwärmung im Behältnis verdampft.

Gemäß der Erfindung ist vorgesehen, dass das Behältnis geschlossen ist, wobei sich das Fluid im Behältnis befindet.

Hierbei kann vorgesehen sein, dass die Kühlvorrichtung einen geschlossenen Kühlkreislauf aufweist, wobei das Behältnis einen Teil dieses Kühlkreislaufs bildet. Der geschossene Kühlkreislauf ermöglicht eine Zirkulation und gleichmäßige Verteilung des Fluids, wodurch die Aufnahme der Wärme durch das Fluid verbessert wird.

Weiter kann vorgesehen sein, dass der Kühlkreislauf mindestens einen Kühlabschnitt, der zum Kühlen des Fluids eigerichtet ist, vorzugsweise einen Kondensator zum Kondensieren des im Behältnis verdampften Fluids, aufweist. Ein solchermaßen ausgelegter Kühlkreislauf bietet nicht nur den oben beschriebenen Wärmepuffereffekt sondern ermöglicht auch eine kontinuierliche Abfuhr der Wärme. Ist der Kühlabschnitt als Kondensator ausgebildet, dann kann das Behältnis als Verdampfer wirken, sodass die Verdunstungskälte des Fluids ausgenutzt werden kann.

Vorzugsweise ist im Kühlkreislauf eine Pumpe angeordnet, um die Zirkulation des Fluids im Kühlkreislauf zu verbessern. Allerdings ist es auch denkbar, den Kühlkreislauf ohne Pumpe zu realisieren. Die Zirkulation des Fluids kann in diesem Fall beispielsweise durch Konvektion des Fluids erreicht werden.

Gemäß einer Ausführungsform wird eine Schaltanlage für ein elektrisches Energieversorgungsnetz, vorgeschlagen, wobei die Schaltanlage einen Bereich aufweist, der sich beim Betrieb der Schaltanlage infolge einer von der Schaltanlage erzeugten Verlustleistung erwärmt. Hierbei ist vorgesehen, dass die Schaltanlage eine Kühlvorrichtung gemäß der vorliegenden Erfindung aufweist.

Vorzugsweise handelt es sich bei der Schaltanlage um eine mittels eines Isoliergases gasisolierte Schaltanlage, wobei der Bereich einen Innenraum und/oder eine Außenwand eines mit dem Isoliergas gefüllten Tanks der Schaltanlage umfasst.

Weitere Merkmale und Vorteile ergeben sich aus der nachfolgenden Beschreibung, in der exemplarische Ausführungsformen der Erfindung angegeben sind. Es zeigen
- Figur 1: eine perspektivische und schematische Darstellung einer Schaltanlage mit Kühlvorrichtung gemäß einer ersten bevorzugten Ausführungsform;
- Figur 2: eine Seitenansicht einer elektrischen Schaltanlage gemäß einer zweiten bevorzugten Ausführungsform;
- Figur 3: eine schematische Darstellung einer Schaltanlage einer dritten bevorzugten Ausführungsform und;
- Figur 4: eine schematische Darstellung eines Kühlkreislaufs einer Schaltanlage.

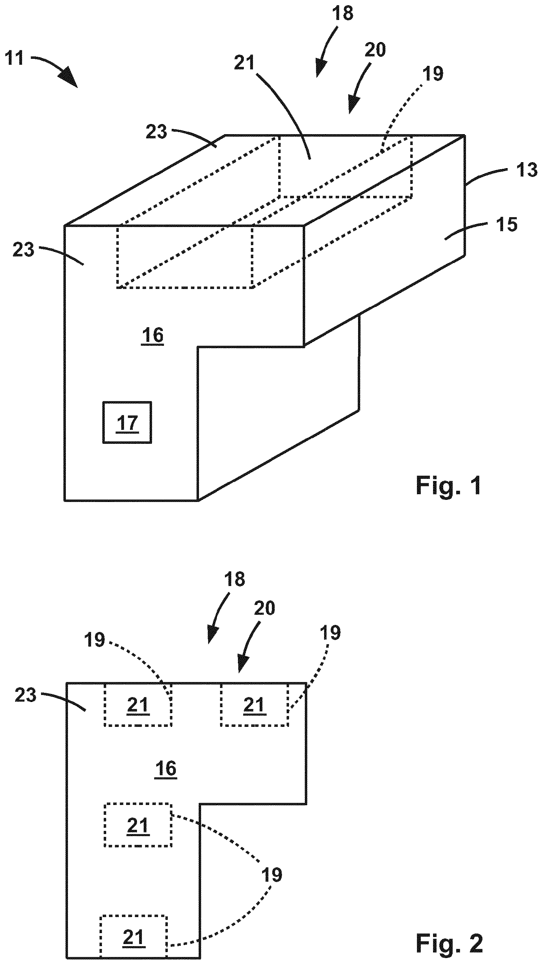

Figur 1 zeigt eine schematische Darstellung einer Schaltanlage 11 eines Mittelspannungsnetzes. Die Schaltanlage 11 weist einen Tank 13 zur Aufnahme eines Isoliergases 15 auf. Bei dem Isoliergas 15 kann es sich beispielsweise um Schwefelhexafluorid (SF₆) handeln.

In einem Innenraum 16 des Tanks 13 der Schaltanlage 11 sind elektrische Komponenten 17 angeordnet, so dass sie vom Isoliergas 15 umgeben sind. Bei den elektrischen Komponenten 17 kann es sich beispielsweise um Schalter oder um elektrische Leiter, insbesondere Sammelschienen, handeln. Die Schaltanlage 11 kann zum Schalten von elektrischen Verbindungen einphasiger oder mehrphasiger Stromsysteme vorgesehen sein. Die elektrischen Komponenten können insbesondere dreiphasig ausgebildet sein, so dass die Schaltanlage 11 zur Anwendung in einem Drehstromnetz geeignet ist.

Im Tank 13 befindet sich eine Kühlvorrichtung 18. Die Kühlvorrichtung 18 weist Wärmespeichermittel 20 mit einem Behältnis 19 auf, das mit einem Fluid 21 befüllt ist oder mit einem solchen befüllt werden kann. In der gezeigten Ausführungsform wird das Behältnis 19 von drei Außenwänden 23 des Tanks 13 begrenzt. In einer nicht gezeigten Ausführungsform ist das Behältnis 19 jedoch nicht am Rand des Innenraums 16 des Tanks 13 angeordnet, sondern befindet sich in einem mittleren Bereich dieses Innenraums 16, so dass keine Außenwand 23 des Tanks gleichzeitig eine Wand des Behältnisses 19 bildet. Generell kann die Platzierung des Behältnisses 19 innerhalb des Tanks 13 beliebig variiert werden. Vorzugsweise kann das Behältnis 19 an denjenigen Stellen innerhalb des Tanks 13 platziert werden, an denen beim Betrieb der Schaltanlage 11 eine relativ große Verlustleistung auftritt, die mit einer entsprechend starken Erwärmung dieser Stellen der Schaltanlage 11 einhergeht.

Wie in Figur 2 dargestellt, können die Wärmespeichermittel 20 der Schaltanlage 11 auch mehrere Behältnisse 19 aufweisen, die im Tank 13 angeordnet sind. Diese Behältnisse 19 verlaufen zwischen zwei gegenüberliegenden Außenwände 23, so dass Abschnitte dieser Außenwände 23 gleichzeitig Wände der Behältnisse 19 bilden. Einige der Behältnisse 19 werden nicht nur von den parallel zur Zeichenebene der Figur 2 verlaufenden Außenwänden 23, sondern zusätzlich von einer weiteren Außenwand 23 begrenzt, die orthogonal zur Zeichenebene der Figur 2 verläuft. Das im mittleren Bereich der Figur 2 dargestellte Behältnis 19 wird lediglich durch die beiden parallel zur Zeichenebene der Figur 2 verlaufenden Außenwände begrenzt.

Beim Betrieb der Schaltanlage 11 tritt an den elektrischen Komponenten 17 eine Verlustleistung auf, wodurch sich die Schaltanlage 11, insbesondere das Isoliergas 15, erwärmt. Ferner erwärmen sich bestimmte Bauteile, beispielsweise die Außenwände 23 aufgrund der Verlustleistung. Die Größe des Tanks 13 und der Außenwände 23 ist so bemessen, dass jedenfalls bei einer mittleren Belastung der elektrischen Komponenten 17 die Erwärmung des Isoliergases 15 beziehungsweise der Außenwände 23 oder weiterer Bauteile der Schaltanlage 11 auf ein akzeptables Maß begrenzt ist, so dass eine zu hohe thermische Belastung der Schaltanlage beziehungsweise deren elektrischen Komponenten 17 und damit ein vorzeitiges Altern der Schaltanlage 11 und/oder der Komponenten 17 vermieden wird.

Bei vielen Anwendungen der Schaltanlage 11 treten zeitweise Lasten auf, die erheblich über der mittleren Last der Schaltanlage 11 liegen (Lastspitzen). Während einer solchen Lastspitze ist die Verlustleistung und somit die von den elektrischen Komponenten 17 abgegebene Wärmeleistung deutlich höher als die Wärmeleistung, die beim Betrieb mit der mittleren Last entsteht. Während der Lastspitze nimmt das Fluid 21 die aufgrund der Verlustleistung erzeugte Wärme zumindest teilweise auf und wirkt dadurch einer Temperaturzunahme der Schaltanlage 11 beziehungsweise deren sich aufgrund der Verlustleistung erwärmenden Bauteile 23 entgegen. Das Fluid 21 wirkt somit als Wärmepuffer.

Die Wirksamkeit des Fluids 21 als Wärmepuffer hängt von dessen Wärmekapazität ab. In einer Ausführungsform ist das Fluid 21 so ausgewählt und der Druck im Behältnis 19 derart festgelegt, dass das Fluid bei Betrieb der Schaltanlage mit der durchschnittlichen Belastung flüssig ist und beim Auftreten einer Lastspitze verdampft. Bei dieser Ausführungsform wirkt das Fluid nicht nur wegen dessen Wärmekapazität als Wärmepuffer, sondern nimmt zusätzlich Wärme in Form der Verdunstungswärme des Fluids 21 auf. Nach dem Ende der Lastspitze kühlt sich das Fluid 21 wieder ab und gibt dabei allmählich die aufgenommene Wärme an andere Teile der Schaltanlage 11 beziehungsweise an die Umgebung der Schaltanlage 11 ab. Das verdunstete Fluid 21 kondensiert und gibt die beim Verdunsten aufgenommene Energie wieder als Kondensationswärme ab.

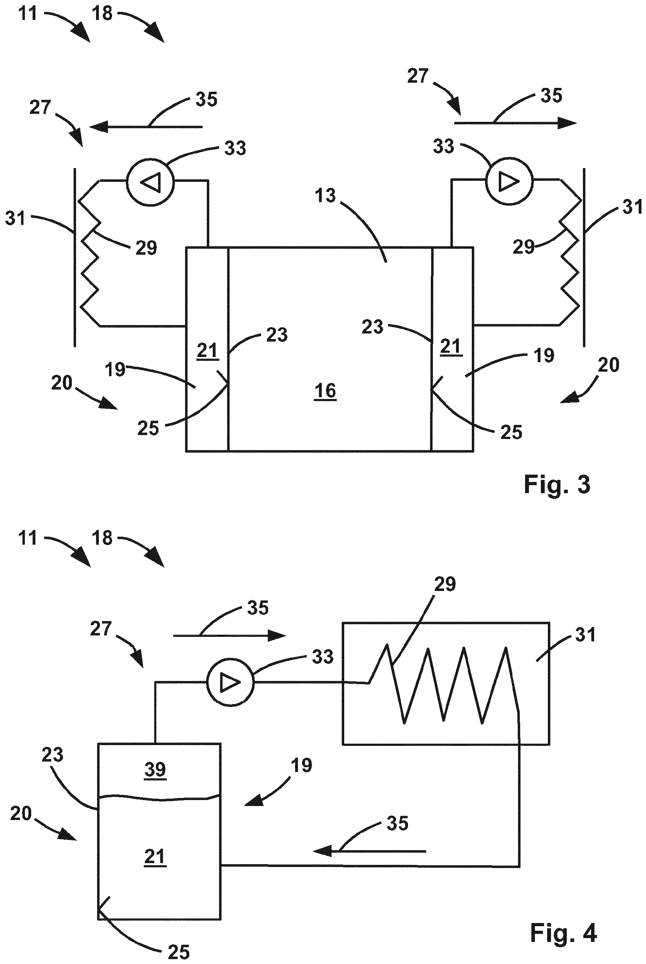

Bei der in Figur 3 gezeigten Ausführungsform sind zwei Behältnisse 19 an einer Außenseite 25 unterschiedlicher Außenwände 23 des Tanks 13 angeordnet. Die Außenwände 23 sind Bauteile der Schaltanlage 11, die sich bei deren Betrieb aufgrund der Verlustleistung erwärmen. In der gezeigten Ausführungsform bilden die an die Behältnisse 19 angrenzenden Außenwände 23 gleichzeitig eine Wand der jeweiligen Behältnisse 19. In einer nicht gezeigten Ausführungsform sind die Behältnisse 19 vollständig von dem Tank 13 getrennte Bauteile, wobei eine Wand der Behältnisse 19 an der jeweiligen Außenwand 23 des Tanks 13 anliegt, so dass die Behältnisse 19 und der Tank 13 miteinander thermisch gekoppelt sind.

Jedes Behältnis 19 bildet einen Teil eines geschlossenen Kühlkreislaufs 27 der Kühlvorrichtung 18. In der gezeigten Ausführungsform ist für jedes Behältnis 19 ein gesonderter Kühlkreislauf 27 vorgesehen. In einer nicht gezeigten Ausführungsform gehören mehrere Behältnisse 19, vorzugsweise alle Behältnisse 19, zu einem gemeinsamen Kühlkreislauf 27.

Jeder Kühlkreislauf 27 weist einen vorzugsweise als Kondensator 29 ausgebildeten Kühlabschnitt zum Abkühlen des Fluids 21 auf. An dem Kühlabschnitt beziehungsweise Kondensator 29 können Wärmeableitmittel 31 angeordnet sein, beispielsweise in Form eines Kühlblechs oder eines Kühlkörpers.

Jeder Kühlkreislauf 27 weist eine Pumpe 33 zum Pumpen des Fluids 21 durch den Kühlkreislauf 27 in eine Strömungsrichtung (Pfeil 35) auf. In einer nicht gezeigten Ausführungsform ist die Pumpe 33 nicht vorhanden, und das Fluid 21 bewegt sich aufgrund der Konvektion selbständig durch den Kühlkreislauf 27.

Wie aus Figur 4 ersichtlich ist, bildet die Außenwand 23 ein Bauteil der Schaltanlage 11, das sich beim Betrieb der Schaltanlage 1 infolge der in den elektrischen Komponenten 17 freigesetzten Verlustleistung erwärmt

Die Pumpe 33 pumpt den Fluiddampf 39 entlang der Strömungsrichtung 35 durch den Kondensator 29 des Kühlkreislaufs 27. Im Kondensator 29 kondensiert das Fluid 21, wobei über die Wärmeableitmittel 31 Wärme an die Umgebung der Schaltanlage 11 abgegeben wird. Das kondensierte Fluid gelangt zurück zum Behältnis 19, wo es erneut erwärmt und verdampft wird.

Die in den Figuren 3 und 4 gezeigten Ausführungsformen bieten nicht nur die im Zusammenhang mit Figuren 1 und 2 beschriebenen Wärmepuffereffekt, sondern transportieren zusätzlich Wärme von dem Innenraum des Tanks 13 ab. Deshalb können die Wärmespeichermittel 20 nicht nur eine erhöhte Verlustleistung aufgrund einer Lastspitze auffangen, sondern die Kühlkreisläufe 27 erlauben darüber hinaus den Betrieb der Schaltanlage mit einer andauernden mittleren Leistung, die höher ist, als es ohne die Kühlkreisläufe 27 möglich wäre. Dahingegen sind bei den in den Figuren 1 und 2 gezeigten Ausführungsformen ausschließlich die als Wärmepuffer arbeitenden Wärmespeichermittel 20 vorgesehen. Eine Kapazität der Wärmespeichermittel 20 ist insbesondere durch eine hinreichend hohe Auslegung einer Masse des Fluids 21 so bemessen, dass die Wärmespeichermittel 20 die infolge der Lastspitze freigesetzte Wärme aufnehmen können, sodass sie eine zu starke Erwärmung der Schaltanlage 11 oder von Teilen davon verhindern.

In den in den Figuren 3 und 4 gezeigten Ausführungsformen wird ein besonders effektiver Wärmetransport vom Tank 13 in die Umgebung der Schaltanlage 11 dadurch erreicht, dass der Aggregatzustand des Fluids 21 sich im Kühlkreislauf 27 ändert (Verdampfen im Behältnis 19 und Kondensation im Kondensator 29). Abweichend hiervon kann in einer nicht gezeigten Ausführungsform vorgesehen werden, dass der Aggregatzustand des Fluids 21 im Kühlkreislauf 27 beibehalten wird. Beispielsweise kann ein ständig flüssiges Fluid 21 vorgesehen sein.

Die oben beschriebenen Ausführungsformen der Kühlvorrichtung 18 weisen zur Umgebung hin geschlossene Kühlkreisläufe 27 beziehungsweise zur Umgebung hin geschlossene Behältnisse 19 auf, wobei die Kühlkreisläufe 27 und/oder die Behältnisse 29 mit dem Fluid befüllt sind.

Insgesamt ermöglicht die Erfindung den Bau kompakter gasisolierter Schaltanlagen 11, die mit vergleichsweise großen Lastspitzen, wie sie in intelligenten elektrischen Energienetzen auftreten, betrieben werden können. Insbesondere kann bei einer Schaltanlage gemäß der Erfindung die Lastspitze länger andauern als bei bekannten Schaltanlagen ähnlicher Größe oder Auslegung.

Aufgrund der Wärmekapazität des Fluids 21 können die elektrischen Komponenten 17 aufgrund ihrer Verlustleistung vorübergehend Wärme abgeben, ohne dass sich die Schaltanlage 11 auf unzulässig hohe Temperaturen erhitzt. Durch entsprechende Festlegung der Druckverhältnisse im Behältnis 19 beziehungsweise im Kühlkreislauf 27 und/oder entsprechender Auswahl des Fluids 21 kann die latente Wärme (Verdunstungswärme) des Fluids 21 in der oben beschriebenen Weise ausgenutzt werden. In Ausführungsformen, in denen der Kühlkreislauf 27 vorgesehen ist, wirkt das Behältnis 19 auf zweierlei Weise. Erstens wirkt es als Wärmepuffer, so dass die Intensität und/oder die Dauer der Lastspitze höher sein kann, als bei vergleichbaren bekannten Schaltanlagen. Zweitens ermöglicht der Kühlkreislauf 27 einen besseren Abtransport der durch die elektrischen Komponenten 17 erzeugten Wärme als dies durch normale Konvektion, beispielsweise durch Umgebungsluft am Tank 13 möglich wäre.

Die Geometrie und/oder die Anzahl der Behältnisse 19 können sehr weitgehend an die Anforderungen der jeweiligen Schaltanlage 11 angepasst werden. So ist auch ein Nachrüsten bekannter Schaltanlagen 11 mit der Kühlvorrichtung 18 umfassend das Behältnis 19 und/oder den Kühlkreislauf 27 möglich.

## Patentansprüche

1. Kühlvorrichtung (18) für eine Schaltanlage (11) für ein elektrisches Energieversorgungsnetz, wobei die Schaltanlage (11) einen Tank (13) mit einem Innenraum (16) aufweist, wobei im Innenraum (16) des Tanks (13) elektrische Komponenten (17) der Schaltanlage (11) angeordnet sind, und wobei der Innenraum (16) sich beim Betrieb der Schaltanlage (11) infolge einer von den elektrischen Komponenten (17) der Schaltanlage (11) erzeugten Verlustleistung erwärmt, **dadurch gekennzeichnet, dass** die Kühlvorrichtung Wärmespeichermittel (20) mit mindestens einem in oder an dem Tank (13) angeordneten Behältnis (19) aufweist, wobei das Behältnis (19) geschlossen ist und sich ein Fluid (21) in dem Behältnis (19) befindet, und wobei das in dem Behältnis (19) befindliche Fluid (21) als Wärmepuffer wirkt und beim Betrieb der Schaltanlage (11) infolge der Verlustleistung erwärmt wird und dadurch zumindest einen Teil der Verlustleistung aufnimmt.

2. Kühlvorrichtung (18) nach Anspruch 1, **dadurch gekennzeichnet, dass** es sich bei der Schaltanlage (11) um eine mittels eines Isoliergases (15) gasisolierte Schaltanlage (11) handelt und der Innenraum (16) des Tanks (13) mit dem Isoliergas gefüllt ist.

3. Kühlvorrichtung (18) nach einem der vorhergehenden Ansprüche, **dadurch gekennzeichnet, dass** der Innenraum (16) ein sich aufgrund der Verlustleistung erwärmendes Bauteil (23) aufweist, wobei das Behältnis (19) an dem Bauteil (23) angeordnet ist oder das Bauteil (23) ein Teil des Behältnisses (19) bildet.

4. Kühlvorrichtung (18) nach Anspruch 3, **dadurch gekennzeichnet, dass** das Bauteil der Außenwand (23) des Tanks (13) entspricht, wobei das Behältnis (19) vorzugsweise an einer Außenseite (25) der Außenwand (23) des Tanks (13) angeordnet ist.

5. Kühlvorrichtung (18) nach einem der vorhergehenden Ansprüche, **dadurch gekennzeichnet, dass** ein Druck des Fluids (21) im Behältnis (19) so vorgegeben ist, dass das Fluid (21) infolge der Erwärmung im Behältnis (19) verdampft.

6. Kühlvorrichtung (18) nach einem der vorhergehenden Ansprüche, **dadurch gekennzeichnet, dass** die Kühlvorrichtung (18) einen geschlossenen Kühlkreislauf (27) aufweist, wobei das Behältnis (19) einen Teil dieses Kühlkreislaufs (27) bildet.

7. Kühlvorrichtung (18) nach Anspruch 6, **dadurch gekennzeichnet, dass** der Kühlkreislauf (27) mindestens einen Kühlabschnitt zum Kühlen des Fluids (21) aufweist, der vorzugsweise als ein Kondensator (29) ausgebildet ist, der zum Kondensieren des im Behältnis (19) verdampften Fluids (21) eingerichtet ist.

8. Kühlvorrichtung (18) nach Anspruch 6 oder 7, **dadurch gekennzeichnet, dass** im Kühlkreislauf (27) eine Pumpe (33) angeordnet ist.

9. Schaltanlage (11) für ein elektrisches Energieversorgungsnetz, wobei die Schaltanlage (11) einen Tank (13) mit einem Innenraum (16) aufweist, wobei im Innenraum (16) des Tanks (13) elektrische Komponenten (17) der Schaltanlage (11) angeordnet sind, und wobei der Innenraum (16) sich beim Betrieb der Schaltanlage (11) infolge einer von den elektrischen Komponenten (17) der Schaltanlage (11) erzeugten Verlustleistung erwärmt, **dadurch gekennzeichnet, dass** die Schaltanlage (11) eine Kühlvorrichtung (18) nach einem der vorhergehenden Ansprüche aufweist.

10. Schaltanlage (11) nach Anspruch 9, **dadurch gekennzeichnet, dass** es sich bei der Schaltanlage (11) um eine mittels eines Isoliergases (15) gasisolierte Schaltanlage (11) handelt und der Innenraum (16) des Tanks (13) mit dem Isoliergas gefüllt ist.

## Claims

1. A cooling device (18) for a substation (11) for an electrical supply network, in which the substation (11) has a tank (13) with an inner chamber (16), and electrical components (17) of the substation (11) are located in the inner chamber (16) of the tank (13), and the inner chamber (16) heats up during operation of the substation (11) as a consequence of a power loss generated by the electrical components (17) of the substation (11), **characterized in that** the cooling device has heat accumulator means (20) with at least one container (19) located in or on the tank (13), the container (19) being closed, and a fluid (21) being located in the container (19), and the fluid (21) located in the container (19) acts as a heat buffer and is heated up during operation of the substation (11) as a consequence of the power loss and as a result absorbs at least a portion of the power loss.

2. The cooling device (18) of claim 1, **characterized in that** the substation (11) is a substation (11) that is gas-insulated by means of an insulating gas (15), and the inner chamber (16) of the tank (13) is filled with the insulating gas.

3. The cooling device (18) of one of the foregoing claims, **characterized in that** the inner chamber (16) has a component (23) that heats up as a consequence of the power loss, and the container (19) is located on the component (23), or the component (23) forms a part of the container (19).

4. The cooling device (18) of claim 3, **characterized in that** the component corresponds to the outer wall (23) of the tank (13), and the container (19) is preferably located on an outer side (25) of the outer wall (23) of the tank (13).

5. The cooling device (18) of one of the foregoing claims, **characterized in that** a pressure of the fluid (21) in the container (19) is predetermined such that the fluid (21) evaporates as a consequence of the heating in the container (19).

6. The cooling device (18) of one of the foregoing claims, **characterized in that** the cooling device (18) has a closed cooling circuit (27), and the container (19) forms a portion of this cooling circuit (27).

7. The cooling device (18) of claim 6, **characterized in that** the cooling circuit (27) has at least one cooling portion for cooling the fluid (21), which portion is preferably embodied as a condenser (29) which is arranged for condensing the fluid (21) that has evaporated in the container (19).

8. The cooling device (18) of claim 6 or 7, **characterized in that** a pump (33) is located in the cooling circuit (27).

9. A substation (11) for an electrical supply network, in which the substation (11) has a tank (13) with an inner chamber (16), and electrical components (17) of the substation (11) are located in the inner chamber (16) of the tank (13), and the inner chamber (16) heats up during operation of the substation (11) as a consequence of a power loss generated by the electrical components (17) of the substation (11), **characterized in that** the substation (11) has a cooling device (18) of one of the foregoing claims.

10. The substation (11) of claim 9, **characterized in that** the substation (11) is a substation (11) that is gas-insulated by means of an insulating gas (15), and the inner chamber (16) of the tank (13) is filled with the insulating gas.

## Revendications

1. Dispositif de refroidissement (18) pour un appareillage électrique de commutation (11) pour un réseau électrique d'alimentation en énergie, dans lequel l'appareillage électrique de commutation (11) présente un réservoir (13) ayant un volume intérieur (16), à l'intérieur du volume intérieur (16) du réservoir (13) étant disposés des composants électriques (17) de l'appareillage électrique de commutation (11), et dans lequel, en fonctionnement de l'appareillage électrique de commutation (11), le volume intérieur (16) s'échauffe dû à une puissance dissipée produite par les composants électriques (17) de l'appareillage électrique de commutation (11), **caractérisé par le fait que** le dispositif de refroidissement présente des moyens de stockage de chaleur (20) ayant au moins un récipient (19) disposé à l'intérieur dudit ou sur ledit réservoir (13), dans lequel ledit récipient (19) est fermé et un fluide (21) se trouve à l'intérieur du récipient (19), et dans lequel le fluide (21) se trouvant à l'intérieur du récipient (19) agit en tant que tampon de chaleur et est chauffé dû à la puissance dissipée, en fonctionnement de l'appareillage électrique de commutation (11), et absorbe ainsi au moins une partie de la puissance dissipée.

2. Dispositif de refroidissement (18) selon la revendication 1, **caractérisé par le fait que** ledit appareillage électrique de commutation (11) est un appareillage électrique de commutation (11) à isolation gazeuse au moyen d'un gaz d'isolation (15) et que le volume intérieur (16) du réservoir (13) est rempli du gaz d'isolation.

3. Dispositif de refroidissement (18) selon l'une quelconque des revendications précédentes, **caractérisé par le fait que** le volume intérieur (16) présente un composant (23) s'échauffant en raison de la puissance dissipée, dans lequel le récipient (19) est disposé sur ledit composant (23) ou ledit composant (23) constitue une partie du récipient (19).

4. Dispositif de refroidissement (18) selon la revendication 3, **caractérisé par le fait que** le composant (23) correspond à la paroi extérieure (23) du réservoir (13), dans lequel le récipient (19) est disposé de préférence sur une face extérieure (25) de la paroi extérieure (23) du réservoir (13).

5. Dispositif de refroidissement (18) selon l'une quelconque des revendications précédentes, **caractérisé par le fait qu'**une pression du fluide (21) à l'intérieur du récipient (19) est prédéterminée de telle manière que le fluide (21) s'évapore dû à l'échauffement, dans le récipient (19).

6. Dispositif de refroidissement (18) selon l'une quelconque des revendications précédentes, **caractérisé par le fait que** le dispositif de refroidissement (18) présente un circuit fermé de refroidissement (27), dans lequel le récipient (19) constitue une partie de ce circuit de refroidissement (27).

7. Dispositif de refroidissement (18) selon la revendication 6, **caractérisé par le fait que** le circuit de refroidissement (27) présente au moins une section de refroidissement pour refroidir le fluide (21) qui, de préférence, est réalisée comme un condenseur (29) qui est adapté pour condenser le fluide (21) qui s'est évaporé dans le récipient (19).

8. Dispositif de refroidissement (18) selon la revendication 6 ou 7, **caractérisé par le fait qu'**une pompe (33) est disposée dans le circuit de refroidissement (27).

9. Appareillage électrique de commutation (11) pour un réseau électrique d'alimentation en énergie, dans lequel l'appareillage électrique de commutation (11) présente un réservoir (13) ayant un volume intérieur (16), à l'intérieur du volume intérieur (16) du réservoir (13) étant disposés des composants électriques (17) de l'appareillage électrique de commutation (11), et dans lequel, en fonctionnement de l'appareillage électrique de commutation (11), le volume intérieur (16) s'échauffe dû à une puissance dissipée produite par les composants électriques (17) de l'appareillage électrique de commutation (11), **caractérisé par le fait que** l'appareillage électrique de commutation (11) présente un dispositif de refroidissement (18) selon l'une quelconque des revendications précédentes.

10. Appareillage électrique de commutation (11) selon la revendication 9, **caractérisé par le fait que** ledit appareillage électrique de commutation (11) est un appareillage électrique de commutation (11) à isolation gazeuse au moyen d'un gaz d'isolation (15) et que le volume intérieur (16) du réservoir (13) est rempli du gaz d'isolation.
